Europäisches Patentamt

European Patent Office

Office européen des brevets

(19)

(11) Veröffentlichungsnummer: **0 199 726**
**B1**

(12) **EUROPÄISCHE PATENTSCHRIFT**

(45) Veröffentlichungstag der Patentschrift:
**21.09.88**

(21) Anmeldenummer: **85900462.4**

(22) Anmeldetag: **21.12.84**

(86) Internationale Anmeldenummer:
**PCT/EP 84/00424**

(87) Internationale Veröffentlichungsnummer:
**WO 85/02752 (04.07.85 Gazette 85/15)**

(51) Int. Cl.⁴: **A 01 D 25/04,** A 01 D 27/04, A 01 D 17/14, A 01 D 33/08, A 01 D 23/02

(54) **VORRICHTUNG ZUM RODEN VON WURZELFRÜCHTEN.**

(30) Priorität: **23.12.83 DE 3346731**

(43) Veröffentlichungstag der Anmeldung:
**05.11.86 Patentblatt 86/45**

(45) Bekanntmachung des Hinweises auf die Patenterteilung:
**21.09.88 Patentblatt 88/38**

(84) Benannte Vertragsstaaten:
**AT BE DE FR NL**

(56) Entgegenhaltungen:
**EP-A-0 041 226**
**DE-C-139 719**
**DE-C-635 650**
**FR-A-1 454 975**
**FR-A-2 222 930**
**FR-A-2 328 383**
**FR-E-76 698**
**FR-E-87 462**
**NL-A-8 100 040**
**US-A-1 331 957**
**US-A-2 385 895**
**US-A-2 406 013**
**US-A-2 538 351**

(73) Patentinhaber: **Dietrich, Martin, Paternoster 5, D-8851 Mertingen (DE)**

(72) Erfinder: **Dietrich, Martin, Paternoster 5, D-8851 Mertingen (DE)**

(74) Vertreter: **Stoffregen, Hans- Herbert, Dr. Dipl.-Phys., Salzstrasse 11a, D-6450 Hanau/Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zum Roden von Wurzelfrüchten gemäß Anspruch 1.

Bei bekannten Vorrichtungen zum Roden von Wurzelfrüchten sind die Schare als feststehende oder auf- und abgehende Zinken ausgebildet, welche die zu rodenden Früchte zwischen sich erfassen. Von Nachteil ist dabei, daß nicht nur die zu rodenden Früchte erfaßt werden, sondern auch eine Verdichtung des Erdreichs verursacht wird und verdichtete Erdklumpen mitgefördert werden. Der Schmutzanteil in Bezug auf die gerodeten Früchte ist daher sehr hoch. Daraus ergibt sich, daß nicht nur ein Substanzverlust an Ackerboden gegeben ist, sondern daß auch die Transportkosten unnötig hoch ausfallen, da bis zu 50 % des angeblichen Erntegewichts Schmutzanteil sein kann. Daher erfolgten bereits Überlegungen, den nach dem Reinigen der Früchte zurückgewonnenen Boden wieder auf die Felder zurückzutransportieren.

In der EP-A-0 041 226 wird bereits eine Vorrichtung zur Feldreinigung von Wurzelfrüchten beschrieben, bei der Rodungswalzen Verwendung finden, die mit ausschließlich radial abragenden Stegen versehen sind. Der Schmutzanteil beim Roden von Feldfrüchten konnte dadurch reduziert werden. Um den dennoch mitgenommenen Ackerboden vor dem Transport der Feldfrüchte zu entfernen, war der Rodevorrichtung eine Reinigungsstation nachgeschaltet, die ein in einem drehbaren Mantel angeordnetes Förderband umfaßte, oberhalb dessen Düsen zum Abgeben von Reinigungsfluiden in Richtung auf die Feldfrüchte angeordnet waren, um so den verbleibenden Schmutzanteil zu entfernen.

Aufgabe der vorliegenden Erfindung ist es, eine Vorrichtung der eingangs beschriebenen Art so auszubilden, daß der beim Roden anfallende an den Wurzelfrüchten haftende Schmutzanteil reduziert wird. Die Aufgabe wird im wesentlichen durch die dem Anspruch 1 zu entnehmenden Maßnahmen gelöst. Hierdurch wird eine in der Vorrichtung vorhandene Reinigungsstation vorgeschlagen, die nahezu vollständig, jedoch schonend, den Schmutz entfernt, ohne daß ein störanfälliger konstruktiver Aufwand erforderlich ist. Ausgestaltungen der Reinigungsstation sind den Ansprüchen 2 bis 6 zu entnehmen.

Nach einem weiteren eigenerfinderischen Vorschlag umfaßt die Vorrichtung eine Transporteinrichtung zur Aufnahme der gerodeten Früchte, wie sie den Ansprüchen 7 bis 10 zu entnehmen ist.

Schließlich ist in den Ansprüchen 11 und 12 eine besondere Ausgestaltung der Rodewalze beschrieben, durch die ein schonendes Erfassen der Wurzelfrüchte möglich ist, ohne daß ein Verdichten des Erdreichs erfolgt, wodurch eine Erhöhung des Schmutzanteils erfolgen würde.

Weitere Einzelheiten, Vorteile und Merkmale der Erfindung ergeben sich nicht nur aus den den Ansprüchen zu entnehmenden Merkmalen, sondern auch aus den der Zeichnung zu entnehmenden Ausführungsbeispielen.

Es zeigen:

Fig. 1 eine Seitenansicht einer Rodungsmaschine,

Fig. 2 eine Draufsicht auf die Maschine gemäß Fig. 1, jedoch im Ausschnitt,

Fig. 3 ein Ausschnitt aus Fig. 1 in vergrößerter Darstellung, umfassend eine Rode- und Transporteinrichtung für Wurzelfrüchte,

Fig. 4 eine Prinzipdarstellung eines Antriebs für die Rode- und Transporteinrichtung gemäß Fig. 3,

Fig. 5 bis Fig. 11 Ausführungsformen von Scharen und Schnittdarstellungen von diesen,

Fig. 12 eine Vorderansicht einer Reinigungsstation gemäß Fig. 1 und 2,

Fig. 13 und Fig. 14 Detaildarstellungen von Elementen der Reinigungsstation gemäß Fig. 12,

Fig. 15 und 16 Seitenansichten weiterer Ausführungsformen von Rodungsmaschinen,

Fig. 17 eine Schnittdarstellung einer weitereren Ausführungsform einer Transportvorrichtung für Wurzelfrüchte,

Fig. 18 eine Draufsicht der Transportvorrichtung nach Fig. 17,

Fig. 19 eine Schnittdarstellung entlang der Linie 19 - 19 in Fig. 18,

Fig. 20 eine Erstausführungsform einer Schabeinrichtung für Wurzelfrüchte,

Fig. 21 eine zweite Ausführungsform einer Schabeinrichtung für Wurzelfrüchte und

Fig. 22 eine Prinzipdarstellung eines mit einer Wurzelfrucht wechselwirkenden Messers.

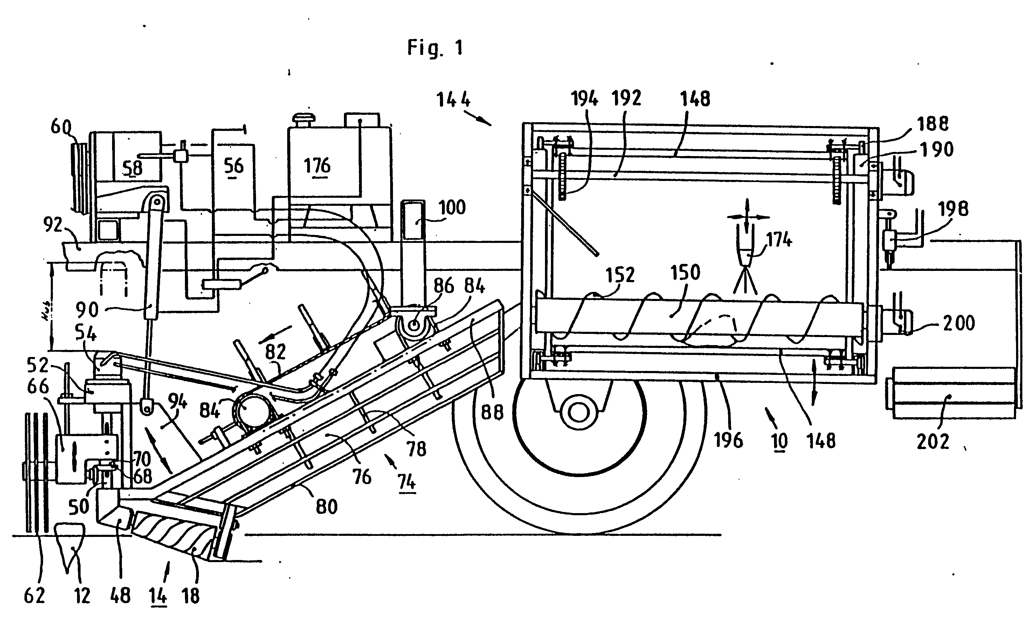

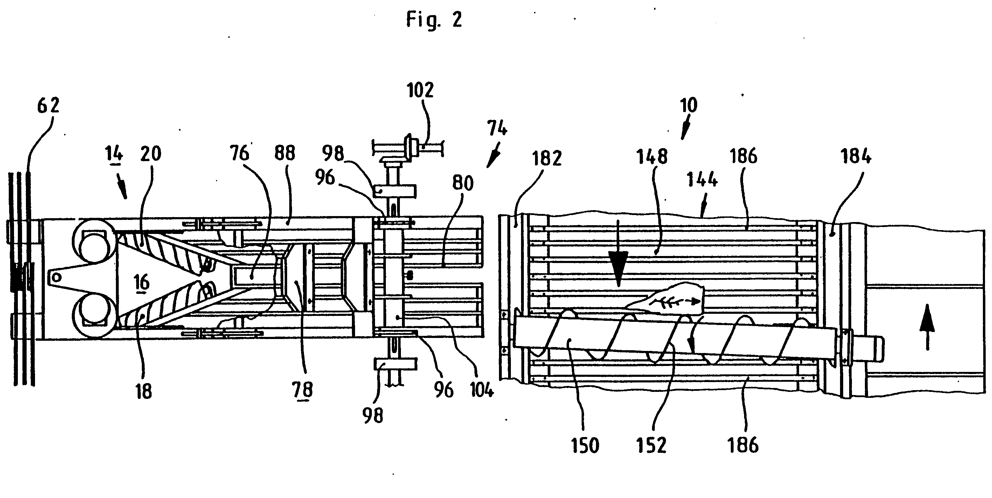

In den Fig. 1 und 2 ist rein schematisch eine Erntemaschine 10 für Wurzelfrüchte 12 wie Zuckerrüben dargestellt, die als gezogenes oder selbstfahrendes Gerät ausgebildet sein kann. Zum Roden der in oder nahezu in Reihe stehenden Wurzelfrüchte 12 ist eine Rodevorrichtung 14 vorgesehen, die im Ausführungsbeispiel aus zwei gleichen, in Fahrtrichtung einen V-förmig geöffneten Einlaufkeil 16 bildenden Rodewalzen 18 und 20 besteht. Die Längsachse der Rodewalzen 18 und 20 kann dabei waagerecht oder nahezu waagerecht angeordnet sein. Die Rodewalzen 18 und 20 greifen im Bereich ihres hinteren Endes tiefer in das Erdreich ein als vorne. Um dies zu erleichtern, können die Rodewalzen 18 und 20 kegelförmig ausgebildet sein, wobei in Fahrtrichtung eine Verjüngung erfolgt. Die nach hinten abgesenkte Anordnung der Rodewalzen 18 und 20 gemäß zeichnerischen Darstellung nach Fig. 1 stellt sicher, daß der Rodeschar auf die Rodefrüchte abgestimmt ist.

Ferner sind die Rodewalzen 18 und 20 zur Hervorrufung einer von unten nach oben gerichteten Aushubbewegung zum Ausheben der Früchte 12 gegensinnig so angetrieben, daß sich im Bereich des inneren, dem Einlaufkeil 16 zugewandten Umfangsabschnitt ein von unten nach oben gerichteter Drehsinn ergibt. Mit anderen Worten bewegt sich die Rodewalze 18 im und die Rodewalze 20 entgegen dem Uhrzeigersinn.

Die Rodewalzen 18 und 20, die - wie erwähnt - gleich ausgebildet sein können, bestehen nun im wesentlichen aus einer drehbar gelagerten angetriebenen Welle 22 mit von dieser abragend und sich in Längsrichtung erstreckenden Vorsprüngen, die vorzugsweise eine Stegform zeigen. Dabei können die Vorsprünge selbst von einer Hülse wie zum Beispiel Hohlzylinder ausgehen, um so lösbar auf die Welle 22 gesetzt zu werden.

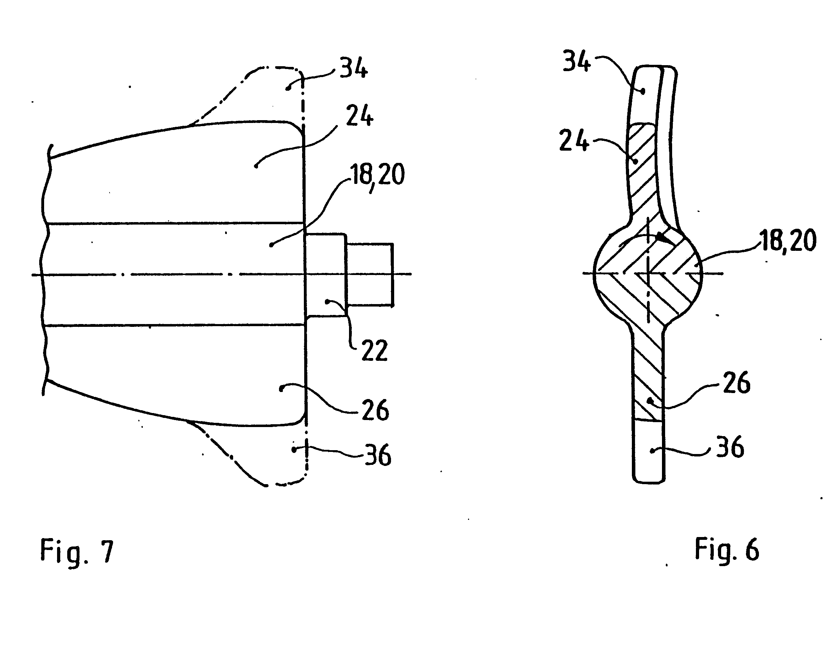

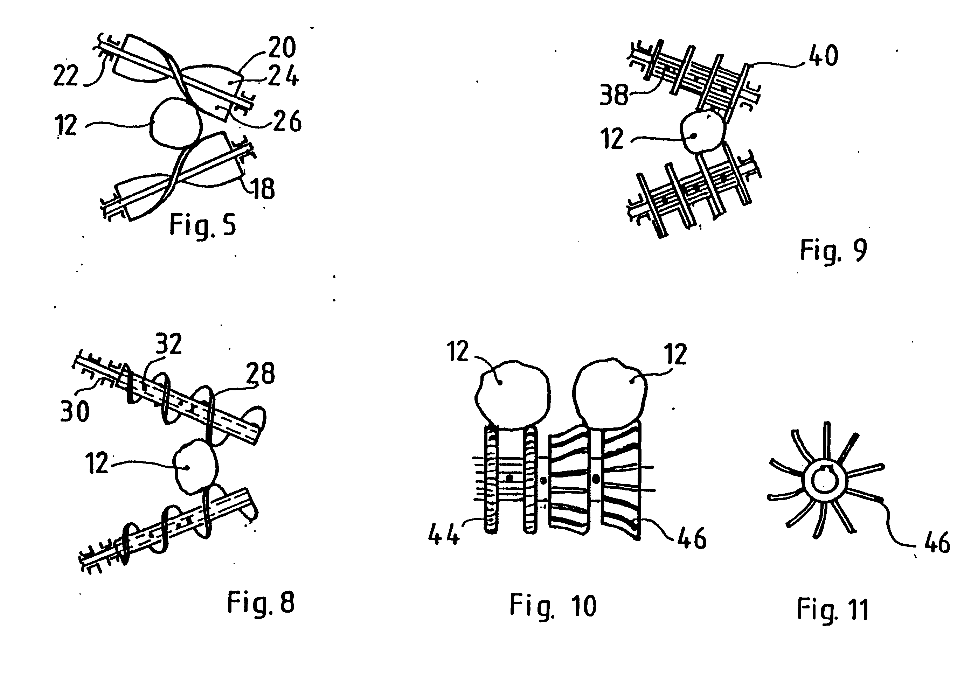

Die von der Welle abragenden Vorsprünge gemäß Fig. 5 bis 7 sind als durchgehende Stege 24 und 26 ausgebildet. Dabei ist ihre Anordnung wendelförmig. Die Stege selbst sind um 180° zueinander versetzt und um ca. 180° gewendelt. Durch die wendelförmige Ausbildung der Stege wird bei Drehung der Rodewalzen und Eingreifen in das Erdreich sichergestellt, - daß zunächst das den zu rodenden Früchten 12 benachbarte Erdreich gelockert wird, das Erdreich vom V - förmigen Einlaufkeil nach außen transportiert und beim Kontakt mit einer Rübe diese nach oben ausgehoben wird. Die so gerodeten Früchte 12 sind weitgehend vom Schmutz befreit, da während des Rodevorgangs selbst keine Verdichtung des Erdreichs erfolgt. Zwar sind im Ausführungsbeispiel nach Fig. 5 bis 7 die Stege 24 und 26 wendelförmig angeordnet, doch kann selbstverständlich auch eine spiralförmige oder schrauben - bzw. schneckenförmige Anordnung gegeben sein, wie es den Fig. 8 und 11 zu entnehmen ist. Da die Rodewalzen gleich ausgebildet sein können, wird bei der Beschreibung der verschiedenen Ausführungsformen stets nur eine Rodewalze näher beschrieben. Die Rodewalze nach Fig. 8 weist auf ihrer Umfangsfläche einen schneckenförmig angeordneten Steg 28 auf, dessen Radius sich in Fahrtrichtung hin verjüngt. Dabei kann die spiralförmig ausgebildete Steg 28 lösbar auf der Welle 30 mittels Stiften 32 angeordnet sein. Anstelle einer spiralförmigen Ausbildung des Stegs kann dieser auch schrauben- bzw. schneckenförmig gewählt sein. Auch besteht die Möglichkeit, mehrere Stege 28 versetzt zueinander anzuordnen.

In Bezug auf die wendelförmige Ausbildung der Stege 24 und 26 ist im Zusammenhang mit Fig. 7 noch zu erwähnen, daß im hinteren Bereich die Vorsprünge 24 und 26 durch zum Beispiel aufgesetzte Laschen 34 und 36 vergrößert sind, die stetig in die jeweilige Kante des Stegs 24 bzw. 26 übergehen. Durch diese Ausbildung im hinteren Bereich der Stege 26 und 24 soll ein besserer Eingriff in das Erdreich und ein einfaches Erfassen der Früchte 12 gegeben sein. Ferner verdeutlicht die Fig. 6, daß die Stege 24 und 26 zumindest in ihrem hinteren Bereich löffelartig ausgebildet sind, wobei die gegebene konkave Verformung zum besseren Fördern des Erdreichs dient. Es liegt demzufolge eine sich in radialer und axialer Richtung der Stege 24 bzw.

26 in Drehrichtung erstreckende konkave Geometrie vor. Die Rodewalzen selbst können beidseitig gelagert sein (Fig. 5, 9), jedoch besteht auch die Möglichkeit eine einseitige Doppellagerung (Fig. 8).

In den Fig. 9, 10 und 11 sind weitere mögliche Ausführungsformen von Rodewalzen dargestellt, wobei in Fig. 9 von einer Welle 38 axial abragende Scheiben 40 ausgehen, die zum Erfassen der Früchte 12 dienen. Zwischen den Scheiben 40 sind Stege 42 zum Fördern des Erdreichs vorgesehen. In Fig. 10 und 11 weisen die Rodewalzen axial und radial abragende schmale Stege 44 bzw. 46 auf, die jeweils als Einheit als Speichenrad mit gegebenenfalls der Fruchtform angepaßter Umfangsfläche ausgebildet sind. Dabei kommmen die Stege 46 gemäß Fig. 11 in Vorderansicht einem Radkranz gleich. Die Stege 46 bilden dabei die Speichen des Radkranzes und können strahlenförmig oder gekrümmt ausgebildet sein. Selbstverständlich gibt es weitere mögliche Geometrien für die Ausbildung der Rodewalzen. Daher sind die den Figuren zu entnehmenden Ausführungsformen nur beispielhaft angeführt, ohne daß dadurch der erfindungsgemäße Gedanke eingeschränkt wird. Wesentliches Merkmal jeder Ausführungsförm ist jedoch, daß das die Früchte 12 umgebende Erdreich beim Roden nicht verdichtet wird, vielmehr beim Roden der Früchte von diesen entfernt wird, so daß der Schmutzanteil der gerodeten Früchte sehr gering ist.

Der Antrieb der Rodewalzen sei zunächst anhand der Rodewalzen 18 und 20 und bzgl. der Fig. 1 und 2 näher erläutert. Das in Fahrtrichtung vordere Ende der Wellen 22 der vorne aus dem Erdreich auftauchenden angetriebenen Rodewalzen 18 und 20 ist in einem Winkelgehäuse 48 gelagert und über ein in diesem angeordneten Kegelradvorgelege mit einer zugeordneten, stehend angeordneten Antriebswelle 50 verbunden, die über ein Unter- bzw. Übersetzungsgetriebe 52 mit einem Antriebsmotor 54 verbunden ist. Im vorliegenden Ausführungsbeispiel ist jeder Antriebswelle 50 ein Getriebe 52 und ein Antriebsmotor 54 zugeordnet. Es wäre aber auch denkbar, daß das Getriebe 52 mit zwei gegeneinander benachbarten Antriebswellen 50 zugeordneten Ausgängen und einem mit einem zugeordneten Antriebsmotor gekoppelten Eingang zu versehen. Die Antriebswellen 50 können zu den Wellen der Rodewalzen 18 und 20 in einem entsprechenden Winkel stehen, so daß sich einfache Kegelräder ergeben.

Bei horizontaler Anordnung der Rodewalzen 18 und 20 ergibt sich automatisch eine lotrechte Anordnung der jeweils zugeordneten Antriebswelle 50. Im dargestellten Ausführungsbeispiel ist trotz horizontaler leicht geneigter Anordnung der Rodewalzen 18 und 20 eine lotrechte Anordnung der Antriebswellen 50 vorgesehen, was vor allem dann zweckmäßig erscheint, wenn das Getriebe 52 mit einer maschinenseitigen Welle gekuppelt ist und die Antriebswellen 50 zur Bewerkstelligung einer Hubbewegung der Rodevorrichtung 14 als Teleskopwellen ausgebildet sind. In Fällen dieser Art können Antriebsmotoren entfallen.

Im dargestellten Ausführungsbeispiel sind die Antriebsmotoren 54 als Hydraulikmotoren ausgebildet, die mittels einer saugseitig an einem Tank 56 liegenden Pumpe 58 mit Hydraulikflüssigkeit versorgt werden. Die Pumpe 58 ist mit einem über Keilriemen mit einer angetriebenen Maschinenwelle verbundenen Antriebsrad 60 versehen. Die Verbindung der Pumpe 58 mit den zugeordneten Hydraulikmotoren 54 erfolgt über hier nicht näher bezeichnete, in sich bewegliche Schläuche, so daß eine Hubbewegung der Rodevorrichtung 14 ermöglicht wird. Ferner besteht die Möglichkeit, mittels eines freifliegenden Kolbenmotors, wie er zum Beispiel in der DE-OS-3 029 287 beschrieben ist, die Hydraulikmotoren anzutreiben und/oder Druckluft zu erzeugen.

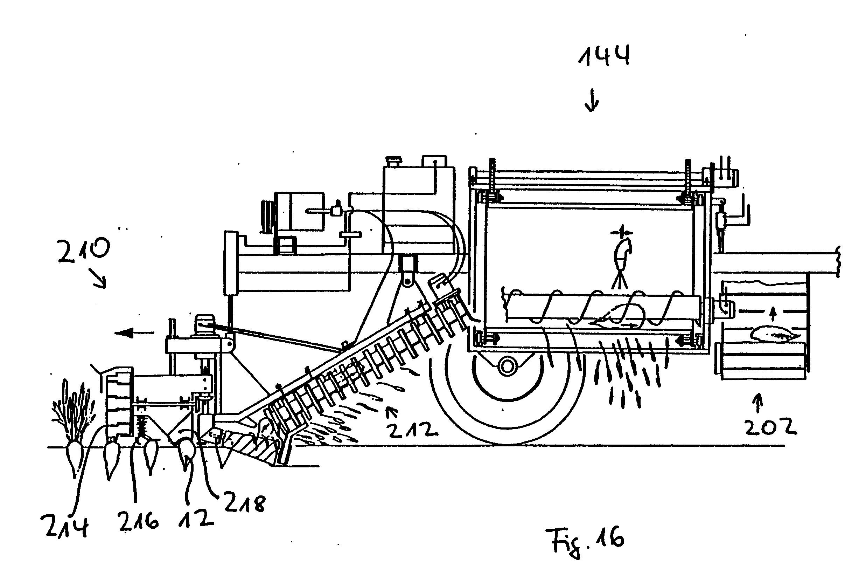

Vor dem Rodevorgang werden die Rüben 12 z. B. mittels einer im Zusammenhang mit den Fig. 15, 16, 20 - 22 nicht dargestellten Einrichtung geköpft und anschließend im Bereich ihres oberen Randes von Blattresten usw. befreit. Hierzu kann eine den Rodewalzen 18 und 20 vorgeordnete Putzeinrichtung 62 vorgesehen, deren Antrieb vom Antrieb der Rodewalzen 18 und 20 abgeleitet ist. Die Putzeinrichtung 62 besteht aus zwei gegensinnig rotierenden Putzschleudern in Form von Hartgummizinken- bzw. Borstenwalzen, die auf einen in der Höhe verstellbaren Lagergehäuse 66 aufgenommen sind. Der Antrieb der Putzschleudern 64 erfolgt über ein Kegelradvorgelege 68, mit einem auf der jeweils zugeordneten Schleuderwelle angeordneten Kegelrad und einem mit einer im Gehäuse 66 gelagerten Büchse 70 verbundenen Kegelrad, die von der jeweils zugeordneten Antriebswelle 50 durchsetzt und mittels einer Nut- und Federverbindung drehschlüssig hiermit verbunden ist. Zur Bewerkstelligung eines Hubs der Putzeinrichtung 62 gegenüber der Rodeeinrichtung 14 ist eine am Gehäuse 66 angreifende an einer Aufnahme des rodevorrichtungsseitigen Getriebes 52 abgestützte Hubvorrichtung 72, hier in Form einer Spindel, vorgesehen. Das Putzen kann auch über Einrichtungen erfolgen wie sie an Hand der Fig. 15, 16, 20 - 22 näher erläutert werden.

Den Rodewalzen 18 und 20 ist zum Abtransport der gerodeten Früchte eine Transporteinrichtung 74 nachgeordnet, die einen nach hinten ansteigenden bodenseitig geöffneten Förderkanal 76 und in diesen eingreifende Mitnehmer 78 für die gerodeten Früchte aufweist. Bei den den Fig. 1 und 2 zugrundeliegenden Ausführungsbeispielen ist der Förderkanal 76 durch einen Gitterrost mit in Transportrichtung verlaufenden Gitterstäben 80 begrenzt. Die Mitnehmer 78 sind als an umlaufenden Bändern 82 befestigte Laschen aus Hartgummi oder einem ähnlichen Kunststoff ausgebildet, wodurch eine Schonung der Früchte erfolgt. Die Bänder 82 laufen über Umlenkrollen 84, die auf quer zur Transportrichtung angeordneten Wellen 86 aufgenommen sind, von denen eine angetrieben ist.

Die den Förderkanal 76 begrenzenden Gitterstäbe 80 sind von einem Schwenkrahmen 88 aufgenommen, der an seinem unteren Ende die den Rodewalzen 18, 20 zugeordnete Antriebseinrichtung und Putzeinrichtung trägt. Der Schwenkrahmen 88 ist mittels einer oder mehrerer Hubzylinder 90 verschwenkbar, der bzw. die am Maschinenrahmen 92 abgestützt ist bzw. sind und an das Getriebe 52 aufnehmenden schwenkrahmenseitigen Stützflächen 94 angreift bzw. angreifen. Der bzw. die Hubzylinder 90 sind als Hydraulikzylinder ausgebildet, die mittels der Pumpe 58 mit Hydraulikflüssigkeit beaufschlagbar sind. Die Schwenkachse des Schwenkrahmens 88 kann eine an diesen befestigte maschinengesteuerte Achse sein. Im dargestellten Ausführungsbeispiel dient die angetriebene Welle 86 der Transporteinrichtung 74 als Schwenkachse. Die Welle 86 ist hierzu seitlich über auf den seitlichen Rahmenschenkeln des Schwenkrahmens 88 befestigte Lagerböcke 96 verlängert und außerhalb hiervon in geeigneten Trägern 98 des Maschinengestells gelagert. Die Träger 98 sind an einer Quertraverse 100 des Maschinenrahmens befestigt. Der Antrieb der praktisch stationär gelagerten Welle 86 kann über eine maschinengestellseitig gelagerte Antriebswelle 102 erfolgen. Die den Bändern 82 zugeordneten Umlenkrollen 84 sind durch Distanzbüchsen 104 gegeneinander und gegenüber den seitlichen Lagerböcken 96 distanziert und durch eine Nut- und Federverbindung mit der zugeordneten Welle 86 verbunden, was eine seitliche Verstellung des gesamten Schwenkrahmens 88 gegenüber der stationären Welle 86 zuläßt. Der Abstand der Träger 98 ist dementsprechend größer als die Breite des Schwenkrahmens 88. Hierdurch ist es möglich, den Schwenkrahmen 88 mit der Rodevorrichtung 14 automatisch auf die zu rodenden Früchte einzustellen. Dies ist vor allem dann von Vorteil, wenn mehrere Reihen gleichzeitig gerodet werden sollen und hierzu mehrere nebeneinander angeordnete Schwenkrahmen mit jeweils zugeordneten Rodevorrichtungen gemäß Ausführungsbeispiel nach Fig. 1 und 2 vorgesehen sind.

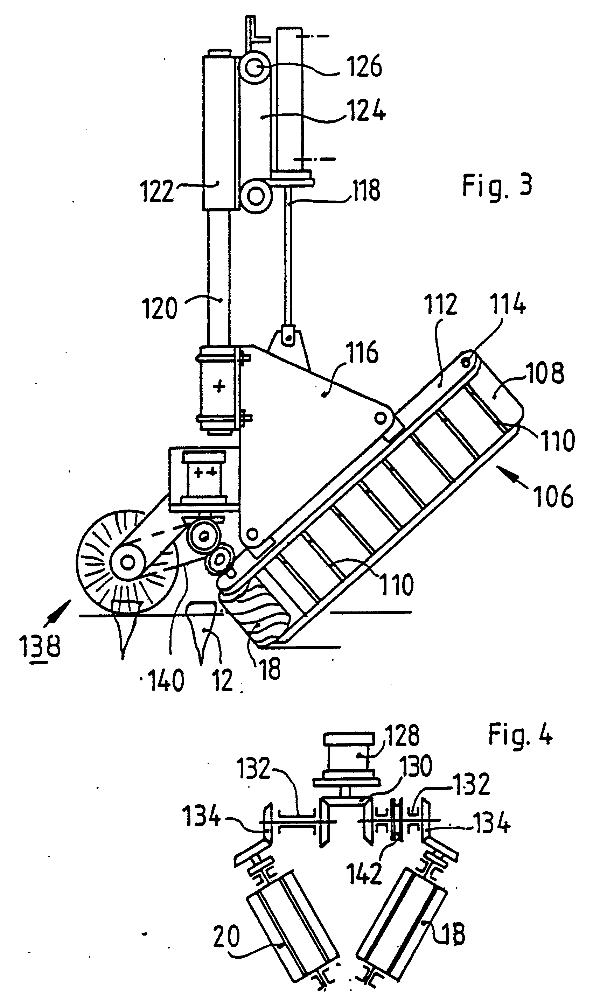

Bei der der Fig. 3 zugrundeliegenden Ausführungsform wird die den Rodewalzen 18, 20 nachgeordnete Transporteinrichtung 106 durch zwei mit ihrer Transportebene V-förmig gegeneinander geneigte, ansteigend angeordnete Förderbänder 108 gebildet, die mit von Querrippen gebildeten Mitnehmern 110 aufweisen. Die Förderbänder 108 sind über in seitlichen Holmen 112 gelagerte Umlenkwalzen geführt, deren Achsen 114 parallel zu den Achsen der dem jeweiligen Förderband 108 vorgeordneten, hiermit praktisch in einer Ebene angeordnete Rodewalze 18 bzw. 20 verlaufen. Die Neigung der Achsen der mit in ihrem hinteren Bereich eingreifenden Rodewalzen 18, 20 ist an die benötigte Steigung der Transporteinrichtung 106 angepaßt. Die mit dem jeweils nachgeordneten Förderband 108 in oder in etwa einer Ebene angeordneten Rodewalzen 18, 20 sind wie die Wellen 114 der Umlenkwalzen auf den seitlichen Holmen 112 aufgenommen, so daß eine gemeinsame Verstellung möglich ist. Hierzu sind die durch die Holme 112 gebildeten, den beiden Förderbändern 108 zugeordneten Träger durch eine Brücke 116 miteinander verbunden, an der ein oder mehrere Hubzylinder 118 angreifen. An der Brücke 116 sind Führungsstangen 120 befestigt, die in zugeordneten Büchsen 122 eines quer zur Fahrtrichtung verstellbaren Schlittens 124 eingreifen. Der Schlitten 124 ist mit geeigneten Laufbüchsen auf zugeordneten Querträgern 126 aufgenommen. Anstelle der vorgesehenen in Hub- bzw. Senkrichtung verlaufenden Längsrichtung wäre auch eine schwenkbare Anordnung der gesamten aus Brücke 116 und den durch die Holme 112 gebildeten Trägern zur Verfügung gestellten Baueinheit möglich.

Der Antrieb der Rodewalzen 18, 20 kann entsprechend der Ausführungsform gemäß Fig. 1 und 2 erfolgen. In dem Ausführungsbeispiel gemäß Fig. 3 und 4 ist zum Antrieb der Rodewalzen 18, 20 ein gemeinsamer Hydraulikmotor 128 vorgesehen, der wie Fig. 4 verdeutlicht, über einen Doppelkegeltrieb 130 zwei Querwellen 132 antreibt, die ihrerseits über Kegeltriebe 134 mit der jeweils zugeordneten Rodewalze 18, 20 verbunden sind. Der Antrieb der die Transporteinrichtung 106 bildenden Förderbänder 108 erfolgt direkt über die jeweils benachbarte Rodewalze 18 bzw. 20. Hierzu ist auf der Rodewalzenwelle ein dem zugehörigen Förderband 108 zugeordnetes Antriebselement 136, etwa eine Kette oder Zahnrad vorgesehen. Sofern eine Putzeinrichtung vorgesehen ist, wird deren Antrieb ebenfalls vom Antrieb der Rodewalzen 18 bzw. 20 abgeleitet. Bei der Ausführung gemäß Fig. 3 ist eine Putzeinrichtung 138 in Form einer liegend angeordneten Walze vorgesehen, die mittels eines Ketten- oder Riementriebs 140 von einer der Querwellen 132 aus antreibbar ist, die hierzu, wie Fig. 4 zeigt, mit einem geeigneten Antriebsrad 142 versehen ist.

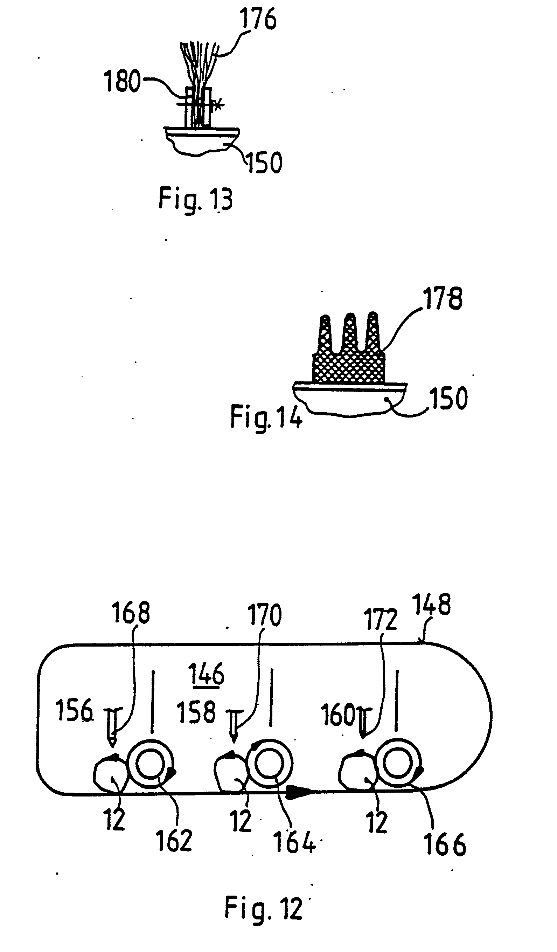

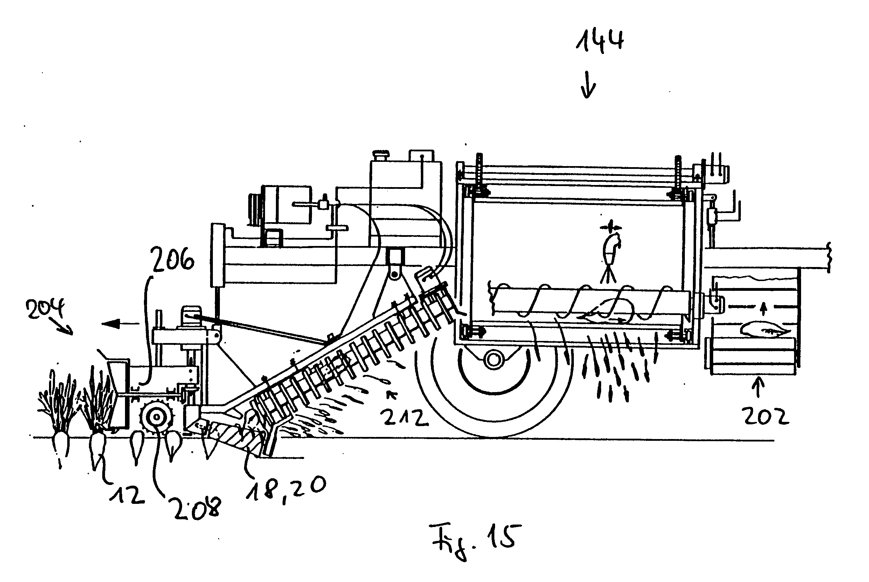

Die gerodeten Früchte 12 können mittels der der Rodevorrichtung 14 jeweils nachgeordneten Transporteinrichtung 74 bzw. 106 in einen Bunker eingeworfen oder auf dem Feld abgelegt werden. Vorzugsweise erfolgt jedoch - wie die Fig. 1 und 2 zusammen mit den Detaildarstellungen der Fig. 12 und 14 verdeutlichen sollen - eine Reinigung der Früchte 12. Dies erfolgt erfindungsgemäß in einer Reinigungsstation 144. Die Reinigungsstation 144 umfaßt einen sich an den Transporteinrichtungen 74 bzw. 106 anschließenden Durchlaufkanal 146, der stirnseitig offen und umfangsseitig von einem trommelartig umlaufenden perforierten Mantel 148 begrenzt ist. Der Durchlaufkanal 146 ist von im Bereich des bodenseitigen Abschnitts des Mantels 148 angeordneter Walze vorzugsweise in Form einer Schnecke 150 durchsetzt, die einen in Transportrichtung verlaufenden Schneckengang 152 aufweist. Der von mehreren vorgeordneten Rodeeinrichtungen 14 und Transporteinrichtungen 74 bzw. 106 versorgte Durchlaufkanal 146 besitzt - wie durch Fig. 12 verdeutlicht werden soll - einen breiten nahezu über die gesamte Maschinenbreite sich erstreckenden Querschnitt, so daß mehrere parallel nebeneinander angeordnete, jeweils eine Spur 156, 158 bzw. 160 für die den Durchlaufkanal 146 durchlaufenden Früchte 12 begrenzende Schnecken 162, 164 bzw. 166 vorgesehen sein können. Die Anzahl der Spuren 156, 158, 160 entspricht der Anzahl der nebeneinander angeordneten Rodeeinrichtungen 14, so daß jeder Rodeeinrichtung mit nachgeordneter Transporteinrichtung 74 bzw. 106 eine der Spuren 156, 158 bzw. 160 zugeordnet ist.

Die in den Durchlaufkanal 146 gelangenden Wurzelfrüchte 12 vorzugsweise in Form von Rüben werden durch den umlaufenden Mantel 148 seitlich an die die einzelnen Spuren 156, 158, 160 begrenzenden Schnecken 162, 164, 166 angelegt und hiermit in Eingriff gebracht. Die Schnecken 150, 162, 174, 166 bilden demnach eine durch den Durchlaufkanal 146 hindurchführende Leiteinrichtung für die hieran entlang wandernden Rüben 12. Die Schnecken 150 bzw. 162, 164, 166 werden mit einem den Drehsinn des Mantels 148 entgegengerichteten Drehsinn angetrieben. Hierdurch wird bewirkt, daß sich die den Durchlaufkanal 146 durchwandernden Rüben 12 auf den umlaufenden Mantel 148 der jeweils zugeordneten Schnecke 150 bzw. 162, 164, 166 abwickeln und so um ihre eigene Längsachse gedreht werden. Gleichzeitig wird durch die Wirkung der Schneckengänge 152 der Schnecken 150 bzw. 162, 164, 166 ein zuverlässiger Vorwärtstransport durch den Durchlaufkanal 146 hindurch, in Fig. 1 und 2 nach rechts, bewirkt.

Die Schnecken 150 bzw. 162, 164, 166 sind bezüglich einer Lotrechten zur Bewegungsrichtung des Mantels 148 leicht schräg gestellt (siehe Fig. 2). Hierdurch ergibt sich ein zur Bewegungsrichtung des Mantels 148 etwa lotrechter Verlauf der Längsachse der eine etwa kegelförmige Konfiguration aufweisenden Rüben 12, was sich günstig auf die erwünschte Abroll- und Drehbewegung auswirkt. Zur Verhinderung einer Beschädigung der an den Schnecken 150 bzw. 162, 164, 166 zur Anlage kommenden Rüben 12 können die Schneckengänge 152 zumindest oberflächennah elastisch gepolstert oder vorzugsweise ganz aus elastischem Material hergestellt sein.

Alternativ dazu besteht die Möglichkeit, daß von der zuvor als Schnecke beschriebenen Walze zum Beispiel eine wellenförmige Oberfläche bildende Vorsprünge aufgehen, die eine schraubenförmige Steigung aufweisen. Hierdurch werden die gleichen Vorteile erzielt, wie sie durch die Ausbildung der Walze als Schnecke gegeben sind. Die Vorsprünge selbst können ihrerseits Noppen aufweisen, um so das Erfassen und Reinigen der Feldfrüchte 12 zu verbessern.

Zur Reinigung können die sich drehenden und gleichzeitig in Längsrichtung bewegenden Rüben 12 mit einem Reinigungsfluid beaufschlagt werden. Hierzu ist den durch die Schnecken 150 bzw. 162, 164, 166 definierten Spuren 156, 158, 160 jeweils eine auf die seitlich an den Schnecken anliegenden Wurzelfrüchte ausgerichtete Düsen 168, 170, 172 bzw. 174 zugeordnet, die mittels eines Verdichters 176 mit einem Druckmedium wie zum Beispiel Druckluft beaufschlagt werden. Infolge der Drehung der Rüben 12 um ihre eigene Längsachse ist eine Beaufschlagung der gesamten Rübenoberfläche gewährleistet.

Die Düsen 168, 170, 172, 174 können starr angeordnet sein. Im dargestellten Ausführungsbeispiel sollen die Düsen jedoch zur Bewerkstelligung einer Verlängerung der Einwirkzeit eine hin- und hergehende Bewegung und zur Konstanthaltung des Abstandes von der jeweils abzustrahlenden Oberfläche eine auf- und abgehende Bewegung durchführen. Dies wird in Fig. 1 durch die Pfeile im Bereich der Düse 174 angedeutet. Die hin- und hergehende Bewegung kann mit Hilfe einer angetriebenen Kulisse gesteuert werden. Zur Steuerung der auf- und abgehenden Bewegung kann ein die Rüben abtastender Fühler vorgesehen sein.

Zur Erhöhung der Reinigungswirkung sind die Schnecken (beispielhaft an der Schnecke 150 verdeutlicht) als mechanische Reinigungswerkzeuge ausgebildet. Hierzu ist die Schnecke 150 an ihrem Umfang mit Kratzborsten 176 und/oder Kratzfingern 178 besetzt. Die Kratzborsten 176 bestehen - wie die Fig. 13 zeigt - aus in umfangsseitig angeordneten Aufnahmestutzen 180 gefaßten Büscheln eines Bürstenmaterials. Die Kratzfinger 178 sind gemäß Fig. 14 als Gummi- oder Kunststoffaufsätze ausgebildet. Die elastischen Kratzborsten 176 bzw. Kratzfinger 178 gewährleisten eine schonende Behandlung der hiermit zum Eingriff kommenden Oberfläche der Rüben 12. Die Kratzborsten 176 bzw. Kratzfinger 178 können außerhalb der Schneckengänge 152 angeordnet sein. Im dargestellten bevorzugten Ausführungsbeispiel sollen die Kratzborsten 176 bzw. Kratzfinger 178 in Form des Schneckenganges 152 angeordnet sein. Dies wird durch entlang einer Schraubenlinie am Umfang der Schneckenwelle angeordnete Aufnahmen für die Kratzborsten 176 bzw. Kratzfinger 178 oder durch durchgehende, mit Kratzborsten 176 bzw. Kratzfingern 178 besetzte Streifen erreicht.

Die Steigung der durch die Kratzborsten bzw. Kratzfinger gebildeten Schneckengänge 152 ist zweckmäßig verhältnismäßig klein, so daß eine starke Einwirkung auf die zu reinigende Oberfläche erreicht wird. Der erforderliche Transport in Längsrichtung kann hierbei durch die gewünschte Drehzahl der Schnecke 150 eingestellt werden.

Zur Sauberhaltung der Kratzborsten 176 bzw. Kratzfinger 178 kann diesen ein Abstreifer in Form einer Leiste oder dergleichen zugeordnet sein. Vielfach genügt es aber bereits, wenn die Kratzborsten 176 bzw. Kratzfinger 178 hierzu so angeordnet sind, daß sie an dem mit gegenläufigem Drehsinn umlaufenden, perforierten Mantel 178 streifen, wodurch der Mantel 178 abgekehrt und gleichzeitig an den Kratzborsten 176 bzw. Kratzfingern 178 anhaftender Schmutz gelockert wird.

Der den Durchlaufkanal 146 umfangsseitig begrenzende Mantel 148 kann aus mehreren - in Fig. 1 und 2 stirnseitig angeordnetenumlaufenden Bändern 182, 184 bestehen, die durch quer hierzu verlaufende, mit Abstand nebeneinander angeordnete, auf der Innenseite der Bänder 182, 184 festgelegte Stäbe 186 miteinander verbunden sind. Dabei können die Stäbe 186 gummiert sein. Der Mantel 148 ist mit auf am Außenumfang der Bänder 182, 184 befestigten Achsen aufgenommenen Laufrollen 188 versehen, die auf zugeordneten, kulissenförmig gebogenen Führungsschienen 190 verschiebbar aufgenommen sind. Die in sich geschlossene Konfiguration der Führungsschienen 190 ·entspricht dem gewünschten Querschnitt des Durchlaufkanals 146. Diese Querschnitt ist hier - wie Fig. 12 verdeutlichen soll - so gewählt, daß sich ein breiter nahezu über die gesamte Maschinenbreite erstreckender Bodenbereich ergibt. Im Ausführungsbeispiel wird der Mantel 148 in entsprechendem Abstand vom Bodenbereich parallel hierzu über diesen hinweggeführt. Die seitlichen Flanken können dabei in Form eines Bogens oder in Form eines geraden mit Anschlüssen versehenen Abschnitts ausgebildet sein. In jedem Fall ist jedoch darauf zu achten, daß sich eine knickfreie Führung des in sich geschlossenen Mantels 148 ergibt. Der Abstand der Stäbe 186 ist so gewählt, daß von den Rüben 12 abgesprengter Schmutz nach unten durchfallen kann, die Rüben 12 selbst jedoch zurückgehalten werden. Der Antrieb des umlaufenden Mantels 148 erfolgt gemäß Fig. 1 durch auf einer Welle 192 angeordneten Zahnrädern 194, die mit den Stäben 186 des Mantels 148 in Zahneingriff stehen. Die Teilung der Stäbe 186 entspricht daher praktisch der Zahnteilung der Zahnräder 194. Die Welle 192 ist hier innerhalb des Durchlaufkanals 146 so angeordnet, daß die Zahnräder 194 zum Eingriff mit den oberen, über den bodenseitigen Bereich des Mantels 148 hinweggeführten Mantelbereichs zum Eingriff kommen, wodurch sich automatisch eine verdeckte Anordnung der Zahnräder 194 ergibt und gleichzeitig Kollisionen mit den den Durchlaufkanal 146 durchlaufenden Rüben 12 unterbleiben.

Die gesamte Reinigungsstation 144 mit den den Mantel 148 aufnehmenden Führungen 190, den den. Durchlaufkanal 146 durchsetzenden Schnecken 150, 162, 164, 166 und der den Zahnrädern 194 zugeordneten Welle 192 sowie der Halterung der Strahldüsen 168, 170, 172, 174 ist auf einem selbsttragenden Rahmen 196 aufgenommen, auf dem die einzelnen Teile der Reinigungsstation 144 unabhängig voneinander befestigt bzw. gelagert sind. Die Reinigungsstation 144 bildet demzufolge eine vormontierbare Baueinheit. Der Rahmen 196 ist zum Ausgleich von Geländeneigungen auf einer quer zur Fahrtrichtung verlaufenden Achse schwenkbar auf dem Maschinengestell aufgenommen und mit einer am Maschinengestell abgestützten Schwenkeinrichtung 198 verbunden. Der Antrieb der unabhängig vom Mantel 148 auf dem Rahmen 106 gelagerten Schnecke 150 erfolgt hierbei bei jeweils zugeordneten Hydraulikmotoren 200, die über hier nicht näher dargestellte bewegliche Schläuche von der Pumpe 58 mit der Hydraulikflüssigkeit beaufschlagbar sind, so daß die Schwenkbarkeit des Rahmens 106 hierdurch nicht beeinträchtigt wird.

Dasselbe gilt für die auf dem Rahmen 106 gelagerte Welle 192. Die Schwenkeinrichtung kann also ebenfalls als ein von der Pumpe 58 aus mit Druckflüssigkeit versorgbares Zylinder-Kolbenaggregat ausgebildet sein.

Die den Durchlaufkanal 146 in gereinigtem Zustand verlassenden Rüben 12 werden mittels eines ausgangsseitig vorgesehenen über die Maschinenbreite und damit über sämtliche Spuren 156, 158, 160 sich erstreckenden Auslegebands 202 ausgelegt.

Vorzugsweise wird der umlaufende Mantel 148 von parallel zur Längsachse der Reinigungsstation verlaufende Stäbe gebildet, wobei zwei zu einer starren Einheit zusammengefasst sind. Die Enden der Stäbe werden dabei von Laschen aufgenommen, zwischen denen jeweils ein bolzenförmiges Element angeordnet ist, das seinerseits in Formschluß mit angetriebenen Zahnrädern gelangt, um so die Drehbewegung des Mantels 148 zu ermöglichen. Dabei weist der zwischen den Laschen verlaufende Bolzen an der Umfangsfläche eine drehbare Hülse auf. Der Bolzen selbst ragt nach außen in eine umlaufende kanalförmige Lagerung hinein, um in diese über Rollenkugellager geführt zu werden. Demzufolge wird der Kanal 144 außenseitig von im Schnitt U-förmigen Führungskanälen begrenzt, deren Außenschenkel einander zugewandt sind, in denen die die Rollenkugellager aufweisenden Enden der zylinderförmigen Hülse bewegt werden, die von den Laschen der Stäbe ausgehen.

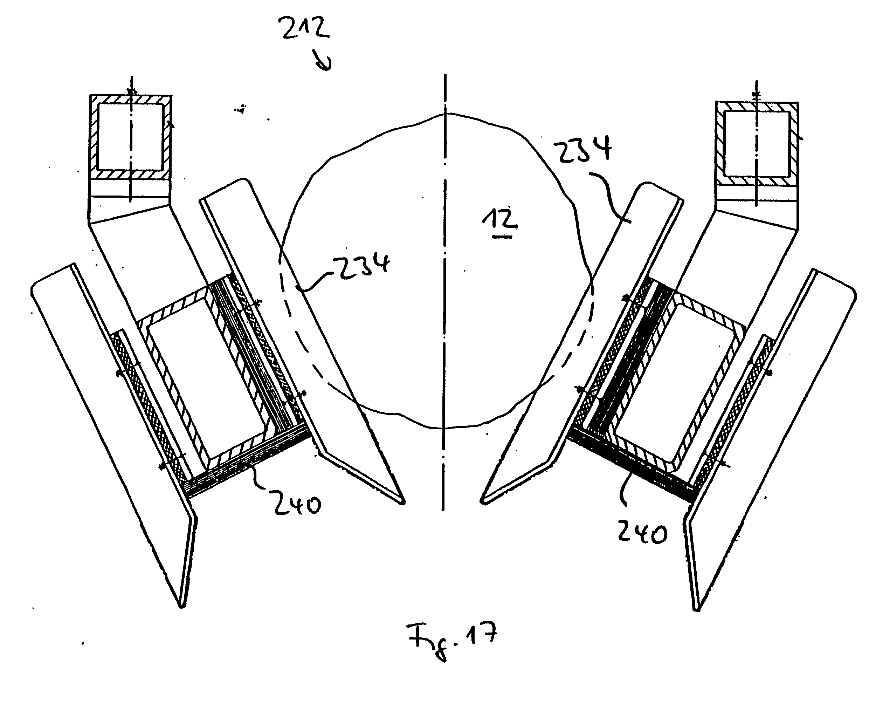

In Fig. 15 ist eine weitere Vorrichtung zum Roden und Reinigen von Wurzelfrüchten wie Zuckerrüben dargestellt, wobei hinsichtlich der Reinigungsstation 144 ein Aufbau gegeben ist, wie er im Zusammenhang mit der Fig. 1 beschrieben ist. Auch ist der Reinigungsstation 144 ein Auslegeband 202 zur Abgabe der gereinigten Wurzelfrüchte nachgeschaltet. Der Reinigungsstation 144 werden die über die Rodewalzen 18, 20 angehobenen Feldfrüchte einer Transportvorrichtung 212 zugeführt, von denen Details den Fig. 17 bis 19 zu entnehmen sind. Den Rodewalzen 18, 20 ist eine Putzschleuder 206 vorgeordnet, über die die Blätter der Wurzelfrüchte 12 entfernt werden. Im Ausführungsbeispiel besteht die Putzschleuder aus rotierenden Messern, wobei die Rotationsachse 206 parallel zur Transportrichtung der Gesamtvorrichtung verläuft. Nachdem die Früchte 12 vom Blattwerk befreit sind, werden sie einer Putzstation 208 zugeführt, die im Ausführungsbeispiel aus einer senkrecht zur Transportrichtung rotierenden Walze besteht, an deren Oberfläche Schaber angeordnet sind. Dabei kann die Höhe der Vorrichtung 202 höhenverstellbar ausgebildet sein, um so sicherzustellen, daß nur der Wurzelfruchtkopf gesäubert wird, also nicht zuviel Fruchtfleisch beschädigt bzw. entfernt wird.

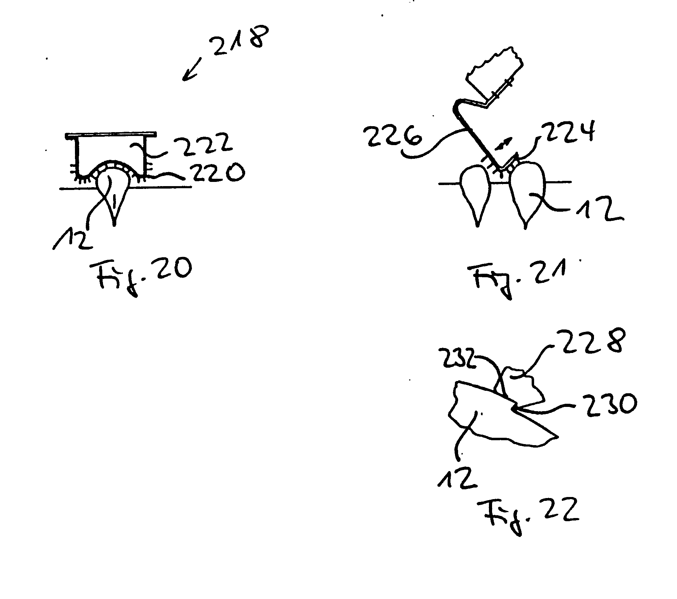

Nach dem Ausführungsbeispiel der Fig. 16 besteht die Köpf- und Putzeinrichtung 210 aus rotierenden Messern 214, wobei die Rotationsachse ebenfalls parallel zur Transportrichtung der Gesamtvorrichtung verläuft. Mittels der rotierenden Messer werden die Blätter nicht nur von den Wurzelfrüchten 12 entfernt, sondern gleichzeitig zerkleinert und über einen Kanal gefördert. Die Einrichtung 214 arbeitet daher in Art einer Schneefräse. Der Blattentfernungseinrichtung 214 ist eine stehende Messereinrichtung 216 nachgeordnet, über die ein weiteres Entfernen von noch vorhandenen Blattresten ermöglicht wird. Schließlich wird der Messereinrichtung 216 eine Kopfputzeinrichtung 218 nachgeordnet, die im Bezug auf die Oberfläche der Wurzelfrüchte 12 anpassungsfähig ausgebildet ist. Hierzu bestehen verschiedene Möglichkeiten, die im Zusammenhang mit den Fig. 20 und 21 näher dargestellt sind. So kann die Kopfputzeinrichtung 218 derart ausgebildet werden, daß die Schaber 220 an der elastischen Außenfläche einer Überdruckkammer 222 angeordnet sind. Dadurch wird die Möglichkeit gegeben, daß sich die Schaber an der Wurzelfrüchtekontur anpassen. Alternativ besteht die Möglichkeit, Schaber 224 an einer federnden Einrichtung 226 anzuordnen, wie es im Zusammenhang mit der Fig. 21 verdeutlicht ist. Auch dadurch ergibt sich die Möglichkeit, daß nur die Außenfläche der Wurzelfrüchte 12 bearbeitet und damit gereinigt werden, ohne daß eine Verletzung oder ein unbeabsichtigtes Entfernen von Fruchtfleisch erfolgt.

Die Schaber 220 bzw. 224 sind im Detail an Hand der Fig. 22 dargestellt. Der dort gezeichnete Schaber 228 weist eine Anlagefläche 232 auf, die im wesentlichen mit der Oberfläche der Wurzelfrucht 12 wechselwirkt und auf dieser entlanggleitet. Von dieser Auflagefläche 232 ragt ein Schneidsteg 230 ab, mit Hilfe dessen die Oberfläche der Wurzelfrucht 12 gesäubert wird. Es erfolgt eine Art spanabhebende Bearbeitung, ohne daß die Gefahr besteht, daß die Wurzelfrucht stark beschädigt wird. Vielmehr erfolgt ein einwandfreies Säubern, so daß die gerodeten und anschließend zu reinigenden Früchte einen überaus geringen Schmutzanteil aufweisen.

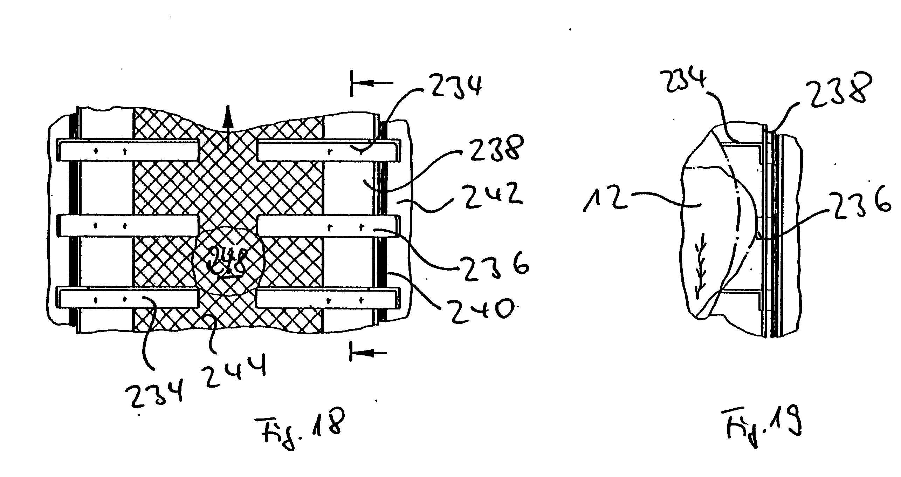

Wesentliche Merkmale der Erfindung bezüglich der Transportvorrichtung 212 sind den Fig. 17 bis 19 zu entnehmen. So verdeutlicht die senkrecht zur Transportrichtung verlaufende Schnittdarstellung der Transportvorrichtung 212, daß die Wurzelfrüchte 12 in einem V-förmig ausgebildeten Förderkanal zu der Reinigungstation 144 bewegt werden. Der Förderkanal wird dabei seitlich von Mitnehmern 234 bzw. 236 begrenzt, die zueinander beabstandet und unterschiedliche Geometrien aufweisen. Dadurch, daß die die Wurzelfrüchte 12 erfassenden Mitnehmer 234 und 236 zueinander beabstandet sind, erfolgt ein weiteres Absieben von Ackerboden, um der Reinigungstation weitgehend vorgereinigte Früchte zuführen zu können. Die Mitnehmer konnen dabei zum einen im Schnitt eine L-Form aufweisen (Mitnehmer 234) bzw. stabförmig ausgebildet sein, wie die Schnittdarstellung gemäß Fig. 19 an Hand des Mitnehmers 236 zeigt. Die Mitnehmer 234 und 236 sind auf einem Gurt bzw. einer Kette 238 befestigt, die in einer Gleitschiene 240 geführt ist, die ihrerseits wiederum von einem Holmen 242 aufgenomm en ist. Unterhalb des Förderkanals befindet sich eine offene Fläche 244 (schraffiert gezeichnet), um Ackerboden, Wurzeln, größere Steine durchfallen zu lassen. Im Ausführungsbeispiel fällt z. B. der Gegenstand 248 zurück aufs Erdreich.

Es sei noch erwähnt, daß die Transportgeschwindigkeit der einzelnen Transportbänder, die die Mitnehmer 234 und 236 aufweisen, geringfügig voneinander abweichende Geschwindigkeiten aufweisen können, um so ein weiteres Abkratzen und Abziehen der Erde von den Früchten 12 zu erreichen. In diesem Fall sollte jedoch, um ein Beschädigen der Wurzelfrüchte zu vermeiden, eine Kanalseite nur Mitnehmer aufweisen, die keine Vorsprünge zeigen, also Mitnehmer der Geometrie, wie sie der Mitnehmer 236 zeigt.

Durch die erfindungsgemäße Lehre wird demzufolge eine Vorrichtung zum Roden und Reinigen von Wurzelfrüchten, insbesondere Zuckerrüben vorgeschlagen, die bei konstruktiv einfachem Aufbau sicherstellt, daß ein problemloses Roden unabhängig von der Bodenbeschaffenheit gegeben ist, daß die gerodeten Früchte gereinigt und weiterverarbeitet werden können, ohne daß auf nennenswerte Schmutzteile geachtet werden muß.

**Patentansprüche**

1. Vorrichtung zum Roden von Wurzelfrüchten wie Zuckerrüben mit zumindest zwei in das Erdreich eingreifenden Scharen, die einen in Fahrtrichtung der Vorrichtung V-förmig geöffneten Einlaufkeil für die Wurzelfrüchte bilden und um seine jeweilige Längsachse eine sich drehende Rodewalze aufweist, und mit einer den Rodewalzen nachgeordneten Transporteinrichtung sowie einer Reinigungsstation, die einen von einem umlaufende Ausnehmungen aufweisenden Mantel begrenzten Durchlaufkanal umfaßt, der von einer Leiteinrichtung für die ihn durchlaufenden Wurzelfrüchte durchsetzt ist, die mittels mindestens einer auf eine durch die Leiteinrichtung entlang des Bodens des Mantels vorgegebene Spur ausgerichteten Strahldüse mit einem Reinigungsmedium beaufschlagbar sind,
dadurch gekennzeichnet,
daß die Leiteinrichtung (150, 162, 164, 166) mindestens eine mit entgegen dem Drehsinn des umlaufenden Mantels (148) gerichteten Drehsinn antreibbare und im bodenseitigen Bereich des Durchlaufkanals (146) angeordnete Walze mit zumindest einem abragenden sich in Längsrichtung der Walze schrauben- oder spiralförmig erstreckenden Vorsprung ist, wobei der Transport der Wurzelfrüchte (12) durch die Reinigungsstation (144) durch Wechselwirken der Wurzelfrüchte mit der sich gegensinnig zu dem Mantel drehenden Leiteinrichtung erfolgt.

2. Vorrichtung nach Anspruch 1,
dadurch gekennzeichnet,
daß der vom umlaufenden Mantel (148) begrenzte Durchlaufkanal (146) einen breiten sich im wesentlichen über die ganze Maschinenbreite sich erstreckenden Bodenbereich aufweist und daß mehrere jeweils eine Spur (156, 158, 160) definierende Walzen oder Schnecken (162, 164, 166) vorgesehen sind.

3. Vorrichtung nach Anspruch 1 oder 2,
dadurch gekennzeichnet,
daß die Längsachse der Walze (150, 162, 164, 166) und die Längsachse des umlaufenden Mantels (148) nicht parallel zueinander verlaufen.

4. Vorrichtung nach Anspruch 1,
dadurch gekennzeichnet,
daß der Vorsprung zumindest oberflächennah elastisch ausgebildet ist.

5. Vorrichtung nach Anspruch 1 mit mehreren jeweils einer Reihe von Wurzelfrüchten zugeordneten nebeneinander angeordneten Paaren von Scharen und Transporteinrichtungen,
dadurch gekennzeichnet,
daß jedem Paar von Scharen und der einem jedem Paar nachgeordneten Transporteinrichtung eine durch eine Walze oder Schnecke (162, 164, 166) definierte Spur (156, 158, 160) im Bereich des Durchlaufkanals (146) zugeordnet ist.

6. Vorrichtung nach Anspruch 1,
dadurch gekennzeichnet,
daß der den Durchlaufkanal (146) begrenzende Mantel (148) aus mehreren zueinander beabstandeten stabförmigen Elementen wie Stäben (186) besteht, von denen jeweils zumindest zwei Stäbe stirnseitig über Laschen starr verbunden, über diese führbar und
antreibbar und mit den angrenzenden ebenfalls
starr miteinander verbundenen Stäben über
Laschen gelenkig verbunden sind.

7. Vorrichtung nach Anspruch 1,
dadurch gekennzeichnet,
daß die Transporteinrichtung (106) zur Bildung
eines Förderkanals V-förmig gegeneinander
geneigte steigend angeordnete mit Mitnehmern
(110) versehene umlaufende Förderelemente
(108) aufweist.

8. Vorrichtung nach Anspruch 7,
dadurch gekennzeichnet,
daß die aufeinanderfolgenden Mitnehmer (234,
236) eines jeden Förderelements unterschiedliche
Geometrien wie L-Form oder Stabform
aufweisen.

9. Vorrichtung nach Anspruch 6,
dadurch gekennzeichnet,
daß die Umlenkwalzen für die Förderelemente
(108) und die jeweils vorgeordnete Rodewalze
(28) von einem Holmen (112) ausgehen.

10. Vorrichtung nach Anspruch 7,
dadurch gekennzeichnet,
daß der Abstand der Mitnehmer (234, 236, 110)
zwischen den Förderelementen (108) so gewählt
ist, daß die Würzelfrüchte (12) erfaßt sind, jedoch
von den Rodewalzen miterfaßbares Erdreich
hindurchfällt.

11. Vorrichtung nach Anspruch 1,
dadurch gekennzeichnet,
daß jede Rodewalze zumindest einen von ihrer
Umfangsfläche radial abragenden Vorsprung
aufweist, im Bereich ihres in Fahrtrichtung
hinteren Endes tiefer in das Erdreich eingreift als
vorne und am hinteren Ende zumindest einen
stegförmigen Vorsprung aufweist, und daß der
Vorsprung (24, 26) in Richtung der Wurzelfrucht
(12) konkav ausgebildet ist.

12. Vorrichtung nach Anspruch 1,
dadurch gekennzeichnet,
daß der Vorsprung (24, 26) in seinem hinteren
Ende zur Bildung einer Erweiterung zumindest
eine der Kontur der Wurzelfrucht (12) angepaßte
Lasche (34, 36) aufweist.

## Claims

1. Device for digging up root crops, like sugar
beets, comprising at least two plowshares
intruding into the ground, defining a feeding
wedge for the root crops with its V-opening in
the driving direction of the device, and a
grubbing roller rotating on its respective
longitudinal axis, a transporting system being
arranged after the grubbing rollers, as well as a
cleaning station comprising a transfer channel
bounded by an outer casing with recesses around
its surface, said transfer channel being passed by
a guide system for the root crops running
through it to which a cleaning agent is admitted
by at least one jet nozzle being aimed at the track
set by the guide system along the bottom of the
casing,
characterized in that the guide system (150,
162), 164), 166) consists of at least one roller
being arranged in the bottom area of the transfer
channel (146) and driven with a sense of rotation
opposite to the sense of rotation of the
surrounding casing (148), said roller having at
least one projecting part extending helically or
spirally in longitudinal direction of the roller,
where the transport of the root crops (12)
through the cleaning station (144) is effected by
the interacting of the root crops with the guide
system rotating in opposite direction to the
casing.

2. Device according to Claim 1, characterized in
that the transfer channel (146) bounded by the
surrounding casing (148) has a wide bottom area
extending substantially all over the full width of
the machine, and that several rollers or worms
(162, 164, 166) are provided for, each of them
defining a track (156, 158, 166).

3. Device according to Claims 1 or 2,
characterized in that the longitudinal axis of the
roller (150, 162, 164, 166) and the longitudinal axis
of the surrounding casing (148) are not running
parallel to each other.

4. Device according to Claim 1, characterized in
that the projecting part is of elastic design at
least close to the surface.

5. Device according to Claim 1 having several
pairs of plowshares and transporting systems
being arranged side by side, one each of said
pairs for handling a respective row of root crops,
characterized in that a track (156, 158, 160)
defined by a roller or worm (162, 164, 166) within
the range of the transfer channel (146) has been
assigned to each pair of plowshares and to each
pair of afterarranged transport systems.

6. Device according to Claim 1, characterized in
that the casing (148) bounding the transfer
channel (146) is composed of several rod-shaped
elements, like rods (186) being arranged at a
distance to each other, of which in each case at
least two rods on the front are positively joined
by straps, via which said rods can be led and
driven, and hinged to the adjacent rods being
likewise positively joined via straps.

7. Device according to Claim 1, characterized in
that the transport system (106), for providing a
conveyer channel, has rotating conveying
elements (108), inclined towards each other
forming a V and ascendingly arranged, equipped
with drivers (110).

8. Device according to Claim 7, characterized in
that the successive drivers (234, 236) of each
conveyer element have varied geometries, like L-
shape or rod-shape.

9. Device according to Claim 6, characterized in
that the guide rollers for the conveyer elements
(108) and the respective grubbing roller (28)
arranged before each guide roller are extending
from a spar (112).

10. Device according to Claim 7, characterized
in that the distance of the drivers (234, 236, 110)
between the conveyer elements (108) is designed in such a manner that the root crops (12) are seized but any soil grasped along with the crops by the grubbing rollers will fall through.

11. Device according to Claim 1, <u>characterized</u> in that each grubbing roller has at least one projecting part radially extending from its circumferential area, and in the area of its far end with respect to the driving direction is entering into the soil more deeply than than at the front end; said roller having at least one bridge-shaped projection at its far end, and that the projecting part (24, 26) in direction of the root crop (12) is concavely designed.

12. Device according to Claim 1, <u>characterized</u> in that the projecting part (24, 26) in its far end has at least one strap (34, 36) adapted to the outline of the root crop (12) for forming an enlargement.


## Revendications

1. Dispositif à arracher les légumes-racines tels que betteraves, à l'aide d'au moins deux socs s'engageant dans le sol, lesquels forment, pour les légumes-racines, un coin d'introduction en forme de V, ouvert dans le sens de déplacement du dispositif, lequel présente un cylindre d'arrachage tournant autour de son axe longitudinal, avec un dispositif de transport situé en aval du cylindre d'arrachage ainsi qu'une station de nettoyage qui comprend un conduit continu limité par une enveloppe présentant des creux rotatifs. Ce conduit est traversé par un dispositif de guidage destiné aux légumes-racines passant par celui-ci, ces derniers pouvant être aspergés à l'aide d'au moins un éjecteur orienté sur une voie définie par le dispositif de guidage le long du fond de l'enveloppe,
   <u>caractériséen ce que</u>
   le dispositif de guidage (150, 162, 164, 166) est au minimum constitué par un cylindre, actionnable et disposé dans la zone côté fond du conduit continu (146), avec sens de rotation opposé à celui de l'enveloppe tournante (148), au moins une saillie s'étendant vers le bas, sous forme hélicoïdale ou spiroide dans le sens longitudinal du cylindre, le transport des légumes-racines étant assuré à travers la station de nettoyage (144) par interaction entre les légumes-racines et le dispositif de guidage tournant dans le sens inverse de celui de l'enveloppe.

2. Dispositif d'après la revendication n° 1,
   <u>caractériséen ce que</u>
   le conduit continu (146), limité par une enveloppe rotative (148), présente une large partie fond s'étendant essentiellement sur toute la largeur de la machine et que sont prévus plusieurs cylindres ou vis sans fin (162, 164, 166) définissant chacun une voie (156, 158, 160).

3. Dispositif d'après la revendication n° 1 ou 2,
   <u>caractériséen ce que</u>
   l'axe longitudinal du cylindre (150, 162, 164, 166) et l'axe longitudinal de l'enveloppe rotative (148) ne suivent pas des tracés parallèles l'un par rapport à l'autrre.

4. Dispositif d'après la revendication n° 1,
   <u>caractériséen ce que</u>
   la saillie est au minimum conçue élastiquement à proximité de la surface.

5. Dispositif d'après la revendication n° 1, avec plusieurs paires de socs et dispositifs de transport disposés côte à côte et affectés chacun à une rangee de legumes-racines,
   <u>caractériséen ce que</u>
   à chaque paire de socs et au dispositif de transport disposé en aval de chaque paire est affectée une voie (156, 158, 160) définie par un cylindre ou une vis sans fin (162, 164, 166), dans la zone du canal continu (146).

6. Dispositif d'après la revendication n° 1,
   <u>caractériséen ce que</u>
   l'enveloppe (148), qui limite le conduit continu (146), se compose de plusieurs éléments en forme de barres, tels que barres (186), espacés les une des autres, dont au minimum deux barres sont reliées en bout de façon rigide par des colliers de fixation, par l'intermédiaire de ceux-ci sont guidables et actionnables et sont reliés de façon articulée, par l'intermédiaire d'éclisses, avec les barres voisines également reliées de façon rigide.

7. Dispositif d'après la revendication n° 1,
   <u>caractériséen ce que</u>
   le dispositif de transport (106) présente, pour la formation d'un conduit de transport, des éléments de transport rotatifs (108) en forme de V, inclinés l'un vers l'autre, disposés de façon ascendante et dotés d'entraîneurs (110).

8. Dispositif d'après la revendication n° 7,
   <u>caractériséen ce que</u>
   les entraîneurs (234, 236) de chaque élément de transport, disposés l'un après l'autre, présente des géométries diverses telles que forme en L ou forme de barre.

9. Dispositif d'après la revendication n° 6,
   <u>caractériséen ce que</u>
   les cylindres de renvoi destinés aux éléments de transport (108) et aux cylindres d'arrachage (28) disposés chaque fois en amont, partent d'un longeron (112).

10. Dispositif d'après la revendication n° 7,
   <u>caractériséen ce que</u>
   la distance des entraîneurs (234, 236, 110) entre les éléments de transport (108) est choisie de telle manière que les légumes-racines (12) soient saisis, la terre saisie par les cylindres d'arrachage tombant toutefois des cylindres d'arrachage.

11. Dispositif d'après la revendication n° 1,
   <u>caractériséen ce que</u>
   chaque cylindre d'arrachage présente au minimum une saillie quittant radialement sa surface périphérique, s'engage plus profondément que devant dans le sol, dans la zone de son extrémité arrière, vu dans le sens du déplacement, qu'il présente, à l'extrémité arriàre, au minimum une saillie en forme de traverse, et que la saillie (24, 26) est conçue de façon concave en direction du légume-racine (12).

12. Dispositif d'après la revendication n° 1, caractériséen ce que
la saillie (24, 26) présente, en son extrémité arrière, pour la formation d'une extension, au minimum une éclisse (34, 36) adaptée au contour du légume-racine (12).

Fig. 1

0199 726

Fig. 2

Fig. 3

Fig. 4

Fig. 7

Fig. 6

0 199 726

Fig. 5

22
20
24
26
12
18

Fig. 9

38
40
12

Fig. 8

32
28
30
12

Fig. 10

12
12
44
46

Fig. 11

46

0 199 726

176

180

150

Fig. 13

178

150

Fig. 14

168    170    172  148

156    146    158    160

12    162    12    164    12    166

Fig. 12

11

Fig. 15

144

210

214 216 12 218

212

202

Fig. 16

0 199 726

Fig. 17

Fig. 18

Fig. 19

0199726

218

222
220

12

Fig. 20

226    224

12

Fig. 21

232    228

230

12

Fig. 22